(19) Europäisches Patentamt
European Patent Office
Office européen des brevets

(11) EP 4 177 302 A1

(12) EUROPEAN PATENT APPLICATION
published in accordance with Art. 153(4) EPC

(43) Date of publication:
10.05.2023 Bulletin 2023/19

(21) Application number: 21831612.3

(22) Date of filing: 28.06.2021

(51) International Patent Classification (IPC):
*C08K 5/00* (2006.01) *C08K 5/12* (2006.01)
*C08L 27/06* (2006.01)

(52) Cooperative Patent Classification (CPC):
C08K 5/00; C08K 5/12; C08L 27/06

(86) International application number:
PCT/KR2021/008087

(87) International publication number:
WO 2022/005130 (06.01.2022 Gazette 2022/01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 01.07.2020 KR 20200080952

(71) Applicant: Hanwha Solutions Corporation
Jung-gu
Seoul 04541 (KR)

(72) Inventors:
- YOO, Myung-Ik
Daejeon 34128 (KR)
- KIM, Jaesong
Daejeon 34128 (KR)
- RYOO, Sungmin
Daejeon 34128 (KR)

(74) Representative: Berggren Oy
P.O. Box 16
Eteläinen Rautatiekatu 10A
00101 Helsinki (FI)

# (54) PLASTICIZER COMPOSITION AND VINYLCHLORIDE RESIN COMPOSITION COMPRISING SAME

(57) This invention relates to an environment-friendly plasticizer composition comprising a cyclohexane dicarboxylate-based compound, vegetable oils, and epoxidized vegetable oils, and a vinylchloride resin composition comprising the same. The vinylchloride resin composition prepared according to the invention has improved low temperature stability, viscosity, smell, and the like.

EP 4 177 302 A1

## Description

### [TECHNICAL FIELD]

CROSS-REFERENCE TO RELATED APPLICATION(S)

This application claims the benefit of Korean Patent Application No. 10-2020-0080952 filed on July 1, 2020 with the Korean Intellectual Property Office, the disclosures of which are herein incorporated by reference in their entirety.

This invention relates to a plasticizer composition with improved low temperature stability and viscosity property, and a vinylchloride resin composition comprising the same.

### [BACKGROUND ART]

Vinylchloride resin (PVC resin) can be variously molded due to hard, soft properties, and has excellent price competitiveness and high utility, and thus, is being applied in various application fields. In order to facilitate processing of vinylchloride resin and improve performances of the final product, additives are often used as auxiliary materials. Such additives include a plasticizer, a stabilizer, a filler, a blowing agent, and the like, and during the preparation process of resin, they are mixed to prepare the final resin. Among them, the plasticizer increases flexibility of resin, thus enabling preparation of various products.

The plasticizer is classified into phthalate-based, epoxy-based, and polyester-based plasticizers according to the molecular structural formula. Among them, the phthalate-based plasticizer is a representative plasticizer that has excellent compatibility with vinylchloride resin and high plasticization efficiency, and thus, was most commonly used. The phthalate-based plasticizer is material in which a phthalate structure is substituted with various alkyl groups. As the phthalate-based plasticizer, EHP(di-2-ethylhexyl phthalate), DINP(di-isononyl phthalate), DIDP(di-isodecyl hthalate), DBP(di-butyl phthalate), and the like may be mentioned.

Despite the above advantages, previous studies have shown that a phthalate-based plasticizers is environmental hormone and harmful to human body, and it was regulated as hazardous material, and material to replace the same has been required. In order to replace phthalate-based plasticizers, studies on environment-friendly plasticizers began. Representatively, terephthalate-based plasticizers, epoxide-based plasticizers, vegetable oil-based plasticizers, cyclohexane-based plasticizers, and mixed plasticizers thereof may be mentioned. Among the environment-friendly plasticizers, as commercial products, DOTP(di-octyl terephthalate) based on terephthalic acid may be mentioned. However, harmfulness is still an issue, and it cannot replace phthalate-based plasticizer in quality, and thus, recently, studies on cyclohexane-based plasticizers are being progressed.

As a representative cyclohexane-based plasticizer, DEHCH(di(2-ethylhexyl)cyclohexane dicarboxylate) may be mentioned. DEHCH has excellent hardness property, and rapid gelling speed, and has little environmental issue unlike phthalate-based plasticizers. However, DEHCH has problems in terms of low temperature stability, volatilization property, and thermal stability, and the like. In order to compensate the properties of DEHCH, there have been previous studies on a plasticizer composition wherein various materials are additionally mixed with DEHCH. However, due to problems in terms of low temperature stability and viscosity property, and fatal drawback of smell, it has low versatility and additional studies are required.

### [DETAILED DESCRIPTION OF THE INVENTION]

#### [Technical Problem]

It is an object of the invention to provide an environment-friendly plasticizer composition with improved thermal stability, and improved low temperature stability and viscosity property.

It is another object of the invention to provide an environment-friendly vinylchloride resin composition with high versatility using the plasticizer composition.

#### [Technical Solution]

According to the invention, there is provided a plasticizer composition comprising a cyclohexane dicarboxylate-based compound, vegetable oils, and epoxidized vegetable oils.

According to the invention, there is also provide a vinylchloride resin composition comprising the plasticizer composition.

The terms used herein are only to explain specific embodiments, and are not intended to limit the invention.

A singular expression includes a plural expression thereof, unless it is expressly stated or obvious from the

context that such is not intended.

As used herein, the terms "comprise" , "equipped" or "have" , etc. are intended to designate the existence of practiced characteristic, number, step, constructional element or combinations thereof, and they are not intended to preclude the possibility of existence or addition of one or more other characteristics, numbers, steps, constructional elements or combinations thereof.

Although various modifications can be made to the invention and the invention may have various forms, specific examples will be illustrated and explained in detail below. However, it should be understood that these are not intended to limit the invention to specific disclosure, and that the invention includes all the modifications, equivalents or replacements thereof without departing from the spirit and technical scope of the invention.

Hereinafter, the invention will be explained in detail.

According to the invention, there is provided a plasticizer composition comprising a cyclohexane dicarboxylate-based compound, vegetable oils, and epoxidized vegetable oils.

The cyclohexane dicarboxylate-based compound has a structure of the following Chemical Formula 1.

[Chemical Formula 1]

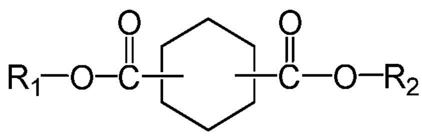

in the Chemical Formula 1,

$R_1$ and $R_2$ are each independently, a C4-12 linear or branched alkyl group.

The compound represented by the [Chemical Formula 1] may be represented by the following [Chemical Formula 1-1] to [Chemical Formula 1-3] according to the substitution position of carboxylate groups at cyclohexane.

[Chemical Formula 1-1]

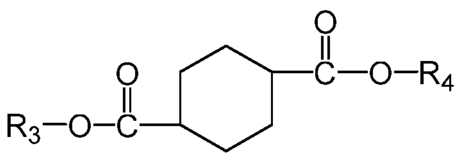

[Chemical Formula 1-2]

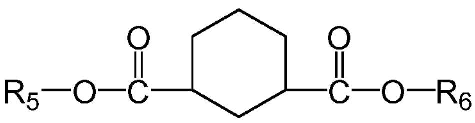

[Chemical Formula 1-3]

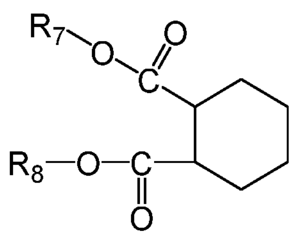

The [Chemical Formula 1-1] is a cyclohexane-1,4-dicarboxylate-based compound, the [Chemical Formula 1-2]

is a cyclohexane-1,3-dicarboxylate-based compound, and the [Chemical Formula 1-3] is a cyclohexane-1,2-dicarboxylate-based compound.

And, in the Chemical Formulas 1-1 to 1-3, $R_3$ to Rg are each independently, a butyl, isobutyl, pentyl, hexyl, heptyl, octyl, 2-ethylhexyl, nonyl, isononyl, 2-propylhetyl, decyl, or isodecyl group.

For example, the cyclohexane-1,4-dicarboxylate-based compound wherein $R_3$ and $R_4$ are identical may be di(butyl)cyclohexane-1,4-dicarboxylate, di(isononyl)cyclohexane-1,4-dicarboxylate, and the like; and the cyclohexane-1,4-dicarboxylate-based compound wherein $R_3$ and $R_4$ are different may be butyl(2-ethylhexyl)cyclohexane-1,4-dicarboxylate, butyl(isononyl)cyclohexane-1,4-dicarboxylate, and the like.

According to one embodiment of the invention, among the constitutional elements of the plasticizer composition, the cyclohexane dicarboxylate-based compound may be a cyclohexane-1,4-dicarboxylate-based compound wherein both $R_3$ and $R_4$ are 2-ethylhexyl groups. This compound has a structure of the following [Chemical Formula 1-4], and is di(2-ethylhexyl)cyclohexane-1,4-dicarboxylate(DEHCH).

[Chemical Formula 1-4]

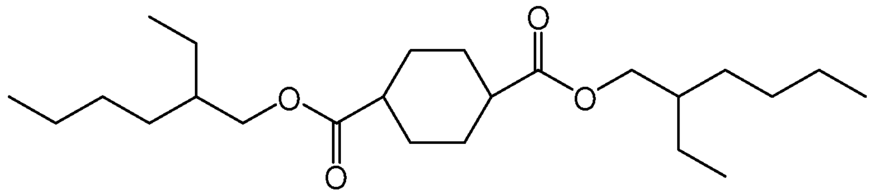

According to one embodiment of the invention, among the plasticizer composition, the cyclohexane dicarboxylate-based compound may comprise one or more selected from the group consisting of di(2-ethylhexyl) cyclohexane-1,4-dicarboxylate, di(isononyl) cyclohexane-1,4-dicarboxylate, di(2-propylheptyl) cyclohexane-1,4-dicarboxylate, di(decyl) cyclohexane-1,4-dicarboxylate, and di(isodecyl) cyclohexane-1,4-dicarboxylate.

The cyclohexane dicarboxylate-based compound has low viscosities at room temperature and low temperature, and thus, can realize excellent coating property, and has rapid gelling speed, small plasticizer migration, and excellent hardness property. However, in case the cyclohexane dicarboxylate-based compound is used alone, volatilization property, thermal stability, and elongation may be inferior, compared to the existing commercial plasticizer DOTP.

The vegetable oil, one of the constitutional elements of the plasticizer composition according to the invention, may comprise, for example, a compound with a structure of the following [Chemical Formula 2].

[Chemical Formula 2]

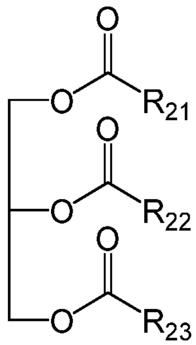

The vegetable oil may have a triglyceride structure wherein glycerol and fatty acid are ester-bonded. $R_{21}$ to $R_{23}$ are each independently, a C1-20 linear or branched alkenyl group or alkyl group, provided that they do not include an epoxy group. The unsaturation degree of $R_{21}$ to $R_{23}$ may have an influence on the color, texture, mechanical properties of the final resin composition. Such a degree of unsaturation may be measured by an iodine value measurement method in which unsaturated bonds are iodized.

And, the vegetable oil may comprise soybean oil, castor oil, linseed oil, palm oil, tall oil, tung oil, grape seed oil, olive oil, jojoba oil, poppyseed oil, cottonseed oil, canola oil, wheat germ oil, peanut oil, walnut oil, and derivatives thereof. The derivatives of vegetable oil may be a mixture of vegetable oil, fatty acid and a halogenated compound, and

the like.

The epoxidized vegetable oil, one of the constitutional elements of the plasticizer composition of the invention, may comprise a compound with a structure having an epoxy group at the fatty acid chain of vegetable oil, such as [Chemical Formula 3].

[Chemical Formula 3]

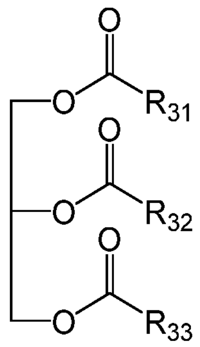

The epoxidized vegetable oil may be a compound wherein epoxy groups are introduced into the unsaturated bonds of vegetable oil through an epoxidation reaction. $R_{31}$ to $R_{33}$ may be a C1-20 linear or branched alkenyl group or alkyl group comprising an epoxy group. The epoxidized vegetable oil may be obtained by subjecting vegetable oil to an epoxidation reaction. For the epoxidation reaction, formic acid may be used.

Specifically, the epoxidized vegetable oil may be epoxidized soybean oil, epoxidized castor oil, epoxidized linseed oil, epoxidized palm oil, epoxidized tall oil, epoxidized tung oil, epoxidized grape seed oil, epoxidized olive oil, epoxidized jojoba oil, epoxidized poppyseed oil, epoxidized cottonseed oil, epoxidized canola oil, epoxidized wheat germ oil, epoxidized peanut oil, epoxidized walnut oil, or a mixture thereof.

A plasticizer composition comprising the epoxidized vegetable oil has improved volatilization property and thermal stability. However, due to the epoxy structure, it has low stability at low temperature, and thus, if a temperature is low, there may be a freezing problem, and particularly, in the winter, the use is limited due to high viscosity.

The plasticizer composition according to one embodiment of the invention maintains transparency, gelling property, and weather resistance, which are the advantages of the cyclohexane dicarboxylate-based compound; and volatilization property and thermal stability, which are the advantages of the epoxidized vegetable oil. In addition, by comprising vegetable oil at a specific rate, low temperature stability and viscosity property, which are the disadvantages of a plasticizer having an epoxy structure, may be improved.

The plasticizer composition according to one embodiment of the invention may comprise, based on 100 parts by weight of the plasticizer composition, 50 to 70 parts by weight of the cyclohexane dicarboxylate-based compound. 10 to 35 parts by weight of the vegetable oils, and 10 to 30 parts by weight of the epoxidized vegetable oils.

Specifically, the cyclohexane dicarboxylate-based compound may be included in the content of about 50 to about 70 parts by weight, preferably about 60 to 70 parts by weight, based on 100 parts by weight of the plasticizer composition. In case the amount of the cyclohexane dicarboxylate-based compound is less than about 50 parts by weight, based on the plasticizer composition, the plasticizer may be frozen in the winter, thus causing a problem in terms of plasticizer flow (pipe transfer, and the like), and the color may be yellowed, thus rendering product toning difficult, and due to low elongation, the product may be torn during construction. If the amount is greater than about 70 parts by weight, thermal stability and tensile strength may be inferior.

And, the vegetable oil may be included in the amount of about 10 to about 35 parts by weight, preferably about 15 to 30 parts by weight, based on 100 parts by weight of the plasticizer composition. If the amount of the vegetable oil is less than about 10 parts by weight, based on the plasticizer composition, elongation may be low and viscosity may be high, and if it is greater than about 35 parts by weight, volatilization loss may be high and thermal stability may be inferior.

And, the epoxidized vegetable oils may be included in the content of about 10 to about 30 parts by weight, preferably about 15 to about 25 parts by weight, based on 100 parts by weight of the plasticizer composition. If the amount of the epoxidized vegetable oil is less than about 10 parts by weight, based on the plasticizer composition, thermal stability may be inferior and volatilization loss may be high, and if it is greater than about 30 parts by weight, viscosity may increase and elongation may be inferior.

According to one embodiment of the invention, the plasticizer composition may be prepared by mixing and blending the cyclohexane dicarboxylate-based material, vegetable oils and epoxidized vegetable oils.

According to one embodiment of the invention, the plasticizer composition may not be frozen at -20 °C to -10

°C. The term 'frozen' as used herein means that a plasticizer composition in a liquid state forms crystals and changes into a solid state that does not have flowability, when observed with a naked eye.

And, there is also provided herein a vinylchloride resin composition comprising the plasticizer composition. The vinylchloride composition comprising the plasticizer composition according to one embodiment of the invention may have improved low temperature stability, volatilization property, thermal stability, and the like.

Throughout the specification, a vinylchloride resin composition refers to (co)polymer copolymerized from vinylchloride-based monomers alone, or vinylchloride-based monomers and comonomers that can be copolymerized therewith. Besides, it may be prepared by a polymerization method such as suspension polymerization, microsuspension polymerization, emulsion polymerization, or miniemulsion polymerization, and the like, by mixing a suspending agent, a buffering agent, and a polymerization initiator, and the like.

And, the vinylchloride resin composition according to one embodiment of the invention comprises, based on 100 parts by weight of the vinylchloride resin composition, about 10 to about 200 parts by weight, preferably about 10 to about 120 parts by weight of the plasticizer composition. If the plasticizer composition is included in a relatively small content, the flexibility of the resin composition may be low, and thus, it may be difficult to realize properties of the final product, and if it is included in a relatively large content, viscosity may be low, thus rendering processing difficult, and tackiness may be exhibited on the product surface.

In addition, the vinylchloride resin composition may further comprise other additives such as a stabilizer, a filler, a blowing agent, and the like. The stabilizer is added to prevent property change of the resin composition, and comprises one or more selected from the group consisting of a Ca-Zn-based compound, a K-Zn-based compound, a Ba-Zn-based compound, an organic tin-based compound; a metallic soap-based compound, a phenol-based compound, a phosphate ester-based compound and, a phosphorous ester-based compound.

And, the filler is used to improve productivity, dry state feel of the resin composition, and comprises one or more selected from the group consisting of calcium carbonate, silica, alumina, kaolin, and magnesium hydroxide, and the like.

And, the blowing agent is used to make the weight of the resin composition light, and it may be a chemical or physical blowing agent. As the chemical blowing agent, azodicarbonamide, azodiisobutyro-nitrile, benzenesulfonhydrazide, p-toluene sulfonyl semi-carbazide, sodium bicarbonate, ammonium bicarbonate, and the like may be exemplified. As the physical blowing agent, carbon dioxide, nitrogen, cyclohexane, toluene, 1,2-dichloroethane, acetone, methyl ethyl ketone, and the like may be mentioned.

Besides the above exemplified materials, other additives may be used in a range within which the object of the invention is not hindered, and may be selected at an appropriate rate according to the purpose of the vinylchloride resin composition.

Meanwhile, according to the invention, there may be provided a vinylchloride resin molded product comprising the plasticizer composition.

The vinylchloride resin molded product may be used in a variety of extrusion, injection, calendering, and compound fields, such as a wallpaper, flooring, interior decoration such as a deco sheet, packaging material such as a wrap for food packaging, a wire, automobile interior material, a film, a hose, or a tube, but is not limited thereto.

## [Advantageous Effects]

The ternary plasticizer composition according to the invention is excellent in terms of general properties such as thermal stability, volatilization loss, mechanical properties, and the like, as well as low temperature stability and viscosity, compared to the existing environment-friendly plasticizer compositions, and thus, is highly useful as an environment-friendly plasticizer.

Thus, a vinylchloride resin composition comprising the plasticizer composition according to the invention is environment-friendly, and has improved low temperature stability, viscosity, and smell, and thus, has high versatility.

## [DETAILED DESCRIPTION OF THE EMBODIMENTS]

Hereinafter, the actions and effects of the invention will be explained in more detail through specific examples of the invention. However, these examples are presented only as the illustrations of the invention, and the scope of the right of the inventio is not determined thereby.

**<Example>**

Example 1

Preparation of plasticizer composition

Using DEHCH as a cyclohexane dicarboxylate-based compound, fatty acids, vegetable-oil, Me esters, chlorinated(Cas No: 95009-45-3) as vegetable oil, and epoxidized soybean oil (Songwon Industry, E-700) as epoxidized vegetable oil, a plasticizer composition was prepared.

Example 2, Example 3, Comparative Examples 1 to 10

Plasticizer compositions were prepared by the same method as Example 1, except that the compositions of the plasticizers were adjusted as shown in Table 1, in Example 1.

The compositions of the plasticizer compositions prepared were summarized in the following Table 1.

[Table 1]

| The following compositions are expressed as the weight ratios of the main components in the plasticizer composition. | | | |
|---|---|---|---|
| | cyclohexane dicarboxylate-based compound | Vegetable oils | Epoxidized vegetable oils |
| Example 1 | 70 | 15 | 15 |
| Example 2 | 60 | 20 | 20 |
| Example 3 | 50 | 25 | 25 |
| Comparative Example 1 | Using DINP | | |
| Comparative Example 2 | Using DOTP | | |
| Comparative Example 3 | 70 | 30 | - |
| Comparative Example 4 | 70 | - | 30 |
| Comparative Example 5 | 50 | 50 | - |
| Comparative Example 6 | 50 | - | 50 |
| Comparative Example 7 | 20 | 80 | - |
| Comparative Example 8 | 20 | - | 80 |
| Comparative Example 9 | 100 | - | - |

Vinylchloride resin composition

**Examples 1-1 and 1-2**

Two vinylchloride resin compositions were prepared using the plasticizer composition prepared in Example 1.

Suspension: 100 parts by weight of PVC(Hanwha Solutions P-1000F), 40 parts by weight of the plasticizer composition of Example 1, 1.5 parts by weight of a Ba/Zn-based heat stabilizer, and 2 parts by weight of E-700 were mixed to prepare a vinylchloride resin composition (Example 1-1).

Emulsion PVC(plastisol): 100 parts by weight of PSR(Hanwha Solutions EL-103) and 60 parts by weight of the

plasticizer composition of Example 1 were mixed to prepare a vinylchloride resin composition (Example 1-2).

Examples 2-1 to 3-2, and Comparative Examples 1-1 to 9-2

Vinylchloride resin compositions were prepared by the same method as Examples 1-1 and 1-2, except that the plasticizer compositions of Example 2, Example 3, and Comparative Example 1 to 9 were respectively used instead of the plasticizer composition of Example 1, in Example 1-1.

**<Experimental Example>**

(1) Volatilization loss

The plasticizer composition was left at 200 °C for 1 hour, and then, weight change before/after that was measured.

Volatilization loss (%) = [(initial weight of plasticizer composition - weight of plasticizer composition after leaving)/ initial weight of plasticizer composition] * 100

(2) Low temperature stability

In order to indirectly evaluate stability according to outdoor storage in the winter, the mixed plasticizer composition was put in a freezer of -20 °C to -10 °C, and the shape of freezing was observed.

(3) Viscosity

For measurement of viscosity, each plastisol prepared above was aged in a 25 °C constant-temperature drying oven for 1 hour, and then, initial viscosity was measured using Brookfield viscometer (spindle #6, 20 RPM), and the results were shown in the following Table 1.

(4) Gelling property

54g of mixed resin was introduced in 95 °C Brabender Mixer, and mixed at 30 rpm for 10 minutes. Through the Torque change during the Mixer processing time, a gelling time of the resin was analyzed.

(5) Plasticizer migration

Migration of the plasticizer was evaluated referring to ISO 177:1988(Plastics -- Determination of migration of Plasticizer). A molding sheet specimen cut to a circle with a diameter of 50 mm was prepared, and an oilpaper (PP porous film) and a glass plate were sequentially overlapped on/under the specimen such that migrated plasticizer was absorbed in the oilpaper. 5 kg load was applied on the specimen and the specimen was left in 70 °C oven for 5 days, and then, weight change rate(%) of the specimen was measured to analyze the degree of migration of plasticizer.

Weight change rate of the specimen was calculated as [(weight change of specimen/weight of specimen before test) *100], and the weight change of the oilpaper was calculated as [(weight change of oilpaper/weight of oilpaper before test) *100]. The weight decrease of the specimen was identical to the weight increase of the oilpaper, and thus, in this experiment, migration of plasticizer was evaluated only by the weight change rate of specimen.

(6) Hardness property

Each suspension vinylchloride composition prepared above was prepared into a 2mm sheet through roll mill(170 °C) and press(180 °C) processing, and hardness was measured with a Shore A Hardness Tester.

(7) Initial coloration

Yellow index of the roll milled sheet was measured with Konica Minolta (CR 400) color difference meter according to ASTM E313 standard.

(8) Thermal stability

The roll milled sheet was cut to a strap shape of 15 mm × 480 mm, and installed in a 190 °C Mathis Oven. It was set up such that the specimen installed in the oven was discharged outside the oven at a rate of 15 mm/5 minutes. After completion of the test, heat resistant time(minutes) was calculated through the length to the point where discoloration began (not-carbonized length, mm).

(9) Tensile strength and elongation

According to ASTM D638, a molding sheet was prepared into a specimen of a dumbbell shape, and then, tensile strength and elongation were measured in UTM(Universal Test Machine) at a rate of 500 mm/min.

[Table 2]

| | Volatilization loss (%) | Low temperature stability | viscosity*1 (cps) | Viscosity after one day*1 (cps) | Gelling speed*1 |
|---|---|---|---|---|---|
| Example 1-1 | 0.97 | Excellent | 3,500 | 4,620 | Rapid |
| Example 2-1 | 1.2 | Excellent | 3,900 | 5,000 | Rapid |
| Example 3-1 | 1.2 | Excellent | 4,280 | 5,352 | Rapid |
| Comparative Example 1-1 | 1.30 | Good | 4,800 | 7,536 | Rapid |
| Comparative Example 2-1 | 0.54 | Good | 3,800 | 4,940 | Very slow |
| Comparative Example 3-1 | 1.3 | Good | 3,550 | 4,160 | Rapid |
| Comparative Example 4-1 | 0.79 | Inferior | 4,283 | 6,230 | Rapid |
| Comparative Example 5-1 | 2.1 | Good | 3,800 | 4,800 | Rapid |
| Comparative Example 6-1 | 0.62 | Very inferior | 6,200 | 10,022 | Slow |
| Comparative Example 7-1 | 3.2 | Good | 4,920 | 5,300 | Rapid |
| Comparative Example 8-1 | 0.92 | Very inferior | 6,800 | 12,200 | Slow |
| Comparative Example 9-1 | 1.4 | - | 2,400 | 3,910 | Rapid |
| *1: Emulsion PVC(plastisol) vinylchloride composition | | | | | |

[Table 3]

| | Migrat ion of plasticizer*2 (%) | hardness*2 | Initial coloration*2 | Heat stability*2 (min) | Tensile strength*2 (kgf/cm$^2$) | elongation*2 (%) |
|---|---|---|---|---|---|---|
| Example 1-2 | 0.6 | 89 | 10.5 | 123 | 215 | 325 |

(continued)

| | Migrat ion of plasticizer*2 (%) | hardness*2 | Initial coloration*2 | Heat stability*2 (min) | Tensile strength*2 ($kgf/cm^2$) | elongation*2 (%) |
|---|---|---|---|---|---|---|
| Example 2-2 | 0.8 | 89 | 11.2 | 132 | 202 | 294 |
| Example 3-2 | 0.8 | 89 | 11.6 | 142 | 200 | 285 |
| Comparative Example 1-2 | 0.1 | 88 | 10.5 | 135 | 215 | 287 |
| Comparative Example 2-2 | 0.9 | 91 | 13.2 | 122 | 214 | 342 |
| Comparative Example 3-2 | 0.8 | 88 | 10.5 | 40 | 201 | 295 |
| Comparative Example 4-2 | 0.6 | 89 | 10.6 | 140 | 202 | 279 |
| Comparative Example 5-2 | 1.2 | 87 | 12.5 | 20 | 188 | 260 |
| Comparative Example 6-2 | 1 | 90 | 10.7 | 200 | 188 | 265 |
| Comparative Example 7-2 | 2.2 | 87 | 14.2 | 20 | 180 | 255 |
| Comparative Example 8-2 | 1.3 | 90 | 10.9 | 210 | 192 | 242 |
| Comparative Example 9-2 | 0.4 | 89 | 10.5 | 102 | 214 | 320 |
| *2: Suspension PVC vinylchloride composition | | | | | | |

Referring to Tables 2 and 3, it can be confirmed that in Examples, low temperature stability was improved compared to commercial plasticizers (DINP, DOTP), and particularly, viscosity property was improved compared to DINP, and heat stability was improved compared to DOTP. It can be also confirmed that other properties are similar to those of commercial plasticizers.

It can be confirmed that volatilization loss, low temperature stability, and heat stability were particularly improved compared to DEHCH single material, and that the other mechanical properties were similar level. Comparing DEHCH with Comparative Examples 3 to 8 wherein one of vegetable oil or epoxidized vegetable oil is mixed, it can be seen that in case only vegetable oil is mixed, although low temperature stability is secured, viscosity, volatilization loss and heat stability are very inferior, and in case only epoxidized vegetable oil is mixed, although heat stability is secured, low temperature stability, viscosity property, tensile strength and elongation, and the like are very inferior.

Consequently, it can be confirmed that in the case of the plasticizer composition of the invention, which is a ternary mixture of DEHCH, vegetable oil and epoxidized vegetable oil, the properties are uniformly improved, and thus, plasticizer properties are improved compared to a single material or binary mixture.

## Claims

**1.** A plasticizer composition comprising

i) a cyclohexane dicarboxylate-based compound represented by the following Chemical Formula 1;
ii) vegetable oils; and
iii) epoxidized vegetable oils:

[Chemical Formula 1]

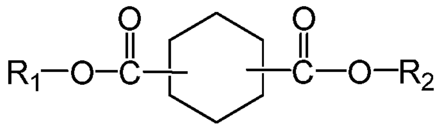

in the Chemical Formula 1,
$R_1$ and $R_2$ are each independently, a C4-12 linear or branched alkyl group.

2. The plasticizer composition according to claim 1, wherein the cyclohexane dicarboxylate-based compound is one of the following Chemical Formulas 1-1 to Chemical Formula 1-3:

[Chemical Formula 1-1]

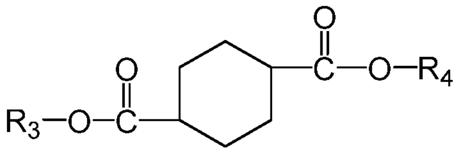

[Chemical Formula 1-2]

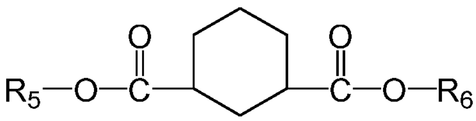

[Chemical Formula 1-3]

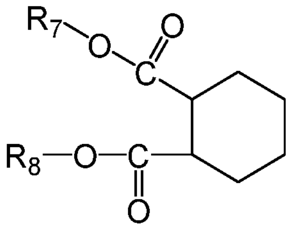

in the Chemical Formulas 1-1 to 1-3,
$R_3$ to $R_8$ are each independently, a butyl, isobutyl, pentyl, hexyl, heptyl, octyl, 2-ethylhexyl, nonyl, isononyl, 2-propylhetyl, decyl, or isodecyl group.

3. The plasticizer composition according to claim 1, wherein the cyclohexane dicarboxylate-based compound comprises one or more selected from the group consisting of di(2-ethylhexyl) cyclohexane-1,4-dicarboxylate, di(isononyl) cyclohexane-1,4-dicarboxylate, di(2-propylheptyl) cyclohexane-1,4-dicarboxylate, di(decyl) cyclohexane-1,4-dicarboxylate, and di(isodecyl) cyclohexane-1,4-dicarboxylate.

4. The plasticizer composition according to claim 1, wherein the vegetable oil comprises one or more selected from the group consisting of soybean oil, castor oil, linseed oil, palm oil, tall oil, tung oil, grape seed oil, olive oil, jojoba oil, poppyseed oil, cottonseed oil, canola oil, wheat germ oil, peanut oil, walnut oil, and derivatives thereof.

5. The plasticizer composition according to claim 1, wherein the epoxidized vegetable oil comprises one or more

selected from the group consisting of epoxidized soybean oil, epoxidized castor oil, epoxidized linseed oil, epoxidized palm oil, epoxidized tall oil, epoxidized tung oil, epoxidized grape seed oil, epoxidized olive oil, epoxidized jojoba oil, epoxidized poppyseed oil, epoxidized cottonseed oil, epoxidized canola oil, epoxidized wheat germ oil, epoxidized peanut oil, and epoxidized walnut oil.

**6.** The plasticizer composition according to claim 1, wherein the plasticizer composition comprises, based on 100 parts by weight of the plasticizer composition;

50 to 70 parts by weight of the cyclohexane dicarboxylate-based compound;
10 to 35 parts by weight of the vegetable oils; and
10 to 30 parts by weight of the epoxidized vegetable oils.

**7.** The plasticizer composition according to claim 1, wherein the plasticizer composition is not frozen at -20 °C to -10 °C.

**8.** A vinylchloride resin composition comprising the plasticizer composition according to any one of claims 1 to 7.

**9.** The vinylchloride resin composition according to claim 8, wherein the vinylchloride resin composition comprises, based on 100 parts by weight of vinylchloride resin, 10 to 200 parts by weight of the plasticizer composition.

**10.** A vinylchloride resin molded product comprising the vinylchloride resin composition of claim 8.

**11.** The vinylchloride resin molded product according to claim 10, wherein the vinylchloride resin molded product is a wallpaper, flooring, a deco sheet, a wrap for food packaging, packaging material, a wire, automobile interior material, a film, a hose, or a tube.

**INTERNATIONAL SEARCH REPORT**

International application No.
**PCT/KR2021/008087**

**A. CLASSIFICATION OF SUBJECT MATTER**

**C08K 5/00**(2006.01)i; **C08K 5/12**(2006.01)i; **C08L 27/06**(2006.01)i

According to International Patent Classification (IPC) or to both national classification and IPC

**B. FIELDS SEARCHED**

Minimum documentation searched (classification system followed by classification symbols)

C08K 5/00(2006.01); C07C 67/62(2006.01); C08J 5/18(2006.01); C08K 3/00(2006.01); C08K 5/092(2006.01); C08K 5/10(2006.01); C08K 5/11(2006.01); C08K 5/12(2006.01); C08K 5/1515(2006.01); C08L 27/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 가소제(plasticizer), 식물성 오일(vegetable oil), 에폭시화 식물성 오일(epoxidized vegetable oil), 사이클로헥산 디카르복실레이트(cyclohexane dicarboxylate)

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0049611 A (LG CHEM, LTD.) 09 May 2019 (2019-05-09) See claims 1, 7 and 9-11; and paragraphs [0055]-[0058] and [0129]-[0131]. | 1-11 |
| A | JP 2015-089931 A (RIKEN TECHNOS CORP.) 11 May 2015 (2015-05-11) See claims 1-7. | 1-11 |
| A | KR 10-0201233 B1 (HITACHI CHEMICAL FILTEC INC.) 15 June 1999 (1999-06-15) See claims 1-11. | 1-11 |
| A | KR 10-2017-0121059 A (LG CHEM, LTD.) 01 November 2017 (2017-11-01) See entire document. | 1-11 |
| A | JP 2016-141712 A (NEW JAPAN CHEM. CO., LTD.) 08 August 2016 (2016-08-08) See entire document. | 1-11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 October 2021** | **05 October 2021** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.
**PCT/KR2021/008087**

**C. DOCUMENTS CONSIDERED TO BE RELEVANT**

| Category* | Citation of document, with indication, where appropriate, of the relevant passages | Relevant to claim No. |
|---|---|---|
| A | US 2013-0137789 A1 (EASTMAN CHEMICAL COMPANY) 30 May 2013 (2013-05-30) See entire document. | 1-11 |

Form PCT/ISA/210 (second sheet) (July 2019)

**INTERNATIONAL SEARCH REPORT**
**Information on patent family members**

International application No.
**PCT/KR2021/008087**

| Patent document cited in search report | | | Publication date (day/month/year) | Patent family member(s) | | | Publication date (day/month/year) |
|---|---|---|---|---|---|---|---|
| KR | 10-2019-0049611 | A | 09 May 2019 | CN | 111094420 | A | 01 May 2020 |
| | | | | EP | 3705516 | A2 | 09 September 2020 |
| | | | | EP | 3705516 | A4 | 23 December 2020 |
| | | | | KR | 10-2237632 | B1 | 08 April 2021 |
| | | | | TW | 201930433 | A | 01 August 2019 |
| | | | | US | 2021-0155788 | A1 | 27 May 2021 |
| | | | | WO | 2019-088736 | A2 | 09 May 2019 |
| | | | | WO | 2019-088736 | A3 | 20 June 2019 |
| JP | 2015-089931 | A | 11 May 2015 | JP | 6219133 | B2 | 25 October 2017 |
| KR | 10-0201233 | B1 | 15 June 1999 | AU | 6470496 | A | 02 September 1997 |
| | | | | JP | 09-278962 | A | 28 October 1997 |
| | | | | KR | 10-1997-0705601 | A | 09 October 1997 |
| | | | | US | 5929133 | A | 27 July 1999 |
| | | | | WO | 97-30115 | A1 | 21 August 1997 |
| KR | 10-2017-0121059 | A | 01 November 2017 | CN | 107709429 | A | 16 February 2018 |
| | | | | CN | 107709429 | B | 20 December 2019 |
| | | | | CN | 107849299 | A | 27 March 2018 |
| | | | | CN | 107849299 | B | 07 February 2020 |
| | | | | EP | 3293225 | A1 | 14 March 2018 |
| | | | | EP | 3293226 | A1 | 14 March 2018 |
| | | | | KR | 10-2017-0121060 | A | 01 November 2017 |
| | | | | KR | 10-2090294 | B1 | 17 March 2020 |
| | | | | KR | 10-2090295 | B1 | 17 March 2020 |
| | | | | TW | 201806923 | A | 01 March 2018 |
| | | | | TW | 201806924 | A | 01 March 2018 |
| | | | | TW | I715761 | B | 11 January 2021 |
| | | | | US | 2018-0163018 | A1 | 14 June 2018 |
| | | | | US | 2018-0171103 | A1 | 21 June 2018 |
| | | | | WO | 2017-183876 | A1 | 26 October 2017 |
| | | | | WO | 2017-183877 | A1 | 26 October 2017 |
| JP | 2016-141712 | A | 08 August 2016 | CN | 106164164 | A | 23 November 2016 |
| | | | | EP | 3124540 | A1 | 01 February 2017 |
| | | | | EP | 3124540 | A4 | 22 November 2017 |
| | | | | EP | 3124540 | B1 | 23 December 2020 |
| | | | | JP | 2015-193817 | A | 05 November 2015 |
| | | | | JP | 2016-006145 | A | 14 January 2016 |
| | | | | JP | 2016-074876 | A | 12 May 2016 |
| | | | | JP | 2016-089155 | A | 23 May 2016 |
| | | | | JP | 2016-141729 | A | 08 August 2016 |
| | | | | JP | 2016-141787 | A | 08 August 2016 |
| | | | | JP | 2016-150966 | A | 22 August 2016 |
| | | | | JP | 2016-155938 | A | 01 September 2016 |
| | | | | JP | 6409384 | B2 | 24 October 2018 |
| | | | | JP | 6409597 | B2 | 24 October 2018 |
| | | | | JP | 6451358 | B2 | 16 January 2019 |
| | | | | JP | 6524729 | B2 | 05 June 2019 |
| | | | | JP | 6528441 | B2 | 12 June 2019 |
| | | | | JP | 6929592 | B2 | 01 September 2021 |
| | | | | KR | 10-2016-0139001 | A | 06 December 2016 |
| | | | | TW | 201542639 | A | 16 November 2015 |

Form PCT/ISA/210 (patent family annex) (July 2019)

**INTERNATIONAL SEARCH REPORT**
**Information on patent family members**

International application No.
**PCT/KR2021/008087**

| Patent document cited in search report | Publication date (day/month/year) | Patent family member(s) | Publication date (day/month/year) |
|---|---|---|---|
| | | TW I654229 B | 21 March 2019 |
| | | US 10407559 B2 | 10 September 2019 |
| | | US 2017-0015810 A1 | 19 January 2017 |
| | | WO 2015-147300 A1 | 01 October 2015 |
| US 2013-0137789 A1 | 30 May 2013 | CA 2617786 A1 | 22 February 2007 |
| | | CA 2617786 C | 12 July 2011 |
| | | CN 101238175 A | 06 August 2008 |
| | | CN 101238175 B | 20 April 2016 |
| | | EP 1913069 A1 | 23 April 2008 |
| | | JP 2009-504851 A | 05 February 2009 |
| | | JP 2013-076096 A | 25 April 2013 |
| | | JP 2014-224275 A | 04 December 2014 |
| | | JP 5442992 B2 | 19 March 2014 |
| | | JP 5775102 B2 | 09 September 2015 |
| | | JP 5912157 B2 | 27 April 2016 |
| | | NO 20081219 L | 07 March 2008 |
| | | US 2007-0037926 A1 | 15 February 2007 |
| | | US 8372912 B2 | 12 February 2013 |
| | | US 9388293 B2 | 12 July 2016 |
| | | WO 2007-021987 A1 | 22 February 2007 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020200080952


### Non-patent literature cited in the description


- *CHEMICAL ABSTRACTS,* 95009-45-3